# EUROPEAN PATENT APPLICATION

(11) **EP 3 151 180 A1**
(43) Date of publication of application: **05.04.2017**
(21) Application number: 15187248.8
(22) Date of filing: 29.09.2015
(51) Int. Cl.: G06Q 10/10

(54) **IDENTIFICATION METHOD AND SYSTEM**

(71) Applicant: STH Development & Design AB, 416 66 Göteborg (SE)
(72) Inventor: TRUEDSSON, Santosh, 416 66 GÖTEBORG (SE)
(74) Representative: Brann AB

(57) **Abstract**

A method (100) for identifying a person is disclosed. It includes a setup process (102) and an operation process (104). The setup process (102) includes: receiving (110) a digital picture from a sender showing the face of a person and obtaining (112) information associated with an electronic identity card for verifying the personal identity of the sender of the digital picture. The setup process (102) further includes: providing and storing (114) an image based on the digital picture. The subsequent operation process (104) comprises: receiving (130) a request for sending the image to a first terminal configured to display the image, and sending (132) the image to the first terminal.

## Description

### Technical Field

The invention relates to the verification of the identity of a person by an electronic identity card and an electronic image showing the face of the person. The invention is further relates to a method and a system performing the verification.

### Background Art

Identity theft typically occurs when someone uses another person's personal identifying information, such as national identifying number, or credit card number, without permission, to commit fraud or possibly other crimes. In identity theft, a person typically pretends to be someone else by assuming that person's identity, usually as a method to gain access to resources, or obtain credit and other benefits, in that person's name. Identity theft is also commonly known as identity fraud or impersonation.

In many countries, identity documents, e.g. pass ports and nationally approved ID-cards, are employed as proof of identity. Typically, these identity documents show a picture of a face together with identification information, such as a national identification or identity number, of the person in the picture. When used in practice, the picture of the face is compared with the face of the person claiming the identity and presenting the identity document. Sometimes, it can be hard to determine if the person in the picture and the person presenting the identity document are the same. For example, the hair or glasses may be different, or glasses may be worn in real life, but not in the picture.

In many places, internet shopping is a steadily growing business and more packages are sent by post and delivery services. The packages are either handed over to the customer at a specific address, or are collected at a service point or post terminal. In these situations, it is typically required that the person receiving or collecting the package presents identity documents. A common scenario is that a person orders an item in another person's name on the internet, and the item is sent by mail together with an invoice. The item is then collected from a service terminal, at which point an ID-card stolen from the other person, or a forged ID-card, is used for identification. Another common scenario is that an item is bought in a store on credit, and a stolen ID-card is used for establishing the credit. This means that the credit is established for the person on the ID-card, and not the person collecting the item from the store. The frauds based on identity theft are costly, both for the persons adversely affected, for insurance companies affected, and for the authorities investigating the crime.

There are also problems when updating or establishing a system for national identity documents. Typically, all old identity documents must be replaced with new ones. If pictures forms part of the documents, it is required that all people concerned must submit a picture to the government or accepted institutions. The management and handling of an established system also requires significant effort and cost, since the identity documents are physical objects that must be provided and distributed.

Electronic identity cards have been introduced in several countries. One example is the BankID-system implemented in Sweden. There are several versions of the system. Some are historic and no longer in use. In one version, Bank-ID on file, a digital certificate is issued by a certificate authority and stored in a non-volatile memory, such as a hard-drive. A Personal Identification Number (PIN)-code or password is associated with the certificate. A program in the same system in which the certificate is stored is used to generate the keys necessary for authentication and digital signing. In another version, Bank-ID on card, a secret private code key is stored in the chip of a smart card or Integrated Circuit Card (ICC). The card is inserted in a reader by its user, a sequence of numbers is provided to the user that is keyed into the reader, the four digit PIN-code associated with the card is also keyed into the reader, which generates a response code in the form of a series of numbers uniquely identifying the user. In yet another version, Mobilt BankID, the secret key is stored in an application program of a wireless device, and authentication and digital signing is performed via the application program and a trusted authentication server. In each of these versions, the electronic identity card, together with some form of PIN-code or password, uniquely identifies or verifies the person using it.

### Summary

It is an object of the invention to at least partly overcome one or more of the above-identified problems. In particular, it is an object to improve the security with respect to identity theft and manipulation for fraud purposes. It is also an object to improve the probability of making a correct identification of a person, and to provide a complementary identification system to improve the security of an existing identification system.

To solve these objects, a method for identifying a person is provided. The method comprises a setup process and an operation process. The setup process comprises: receiving a digital picture from a sender showing the face of the person, obtaining information associated with an electronic identity card for verifying the personal identity of the sender of the digital picture. The setup process may further comprise: providing and storing an image based on the digital picture. The operation process comprises: receiving a request for sending the image to a first terminal configured to display the image, and sending the image to the first terminal.

The request is for an image and the personal identity of the provider of the image is known. Thus the image that is sent to the first terminal can be assumed to show the person claiming an identity simply by comparing the image with the face of the person. Effectively, the proposed method replaces the need for an image on identity documents.

The sender may be a terminal, a terminal is here understood to encompass personal computers (PCs), such as stationary computers, including desktop computers and home-theater PCs, and portable computers, including laptops, tablets, pocket PCs. The sender is also understood to encompass smartphones and mobile phones. Further, a terminal is here understood to encompass a device configured to communicate electronically or digitally and to be operated directly by a single user, i.e. without any intervening computer operator.

A digital picture image is here understood to encompass a numeric representation of a two-dimensional image or a digital image, such as commonly known standard image formats including Graphics Interchange Format (GIF), Joint Photographic Experts Group (JPEG), and Portable Network Graphics (PNG). An image based on the digital picture is here understood to encompass the digital picture as such, or an image generated from the digital picture, for example by modifying the size, contrast, or color of the digital picture.

The request may come from the first terminal. Alternatively, the request could have come from another source, such as the second terminal. However, a first terminal is not likely to be manipulated for fraud purposes, since it is typically controlled by someone demanding a verification of a personal identity. Thus, the specified request has the effect of an improved security.

An electronic identity card is here understood to encompass electronic or digital means by which the personal identity of the sender of the digital picture can be identified. This may be in the form of an electronic or digital signature or seal used for identification or verification purposes on the internet. The information associated with an electronic identity card is here understood to verify the personal identity of the sender. This means that the information is uniquely tied to a physical person. It should be noted that a user name and an associated a password is not tied to a physical person. For example, user names and passwords can be shared between several persons.

Obtaining information associated with an electronic identity card is here understood to encompass generating the information and receiving the information, for example from an authentication server.

The setup process may further comprise: identifying an electronic communication link to a second terminal, wherein the second terminal is a wireless device. A wireless device is here understood to encompass mobile phones, smartphones and tablets computers. An example of an electronic communication link is a connection established via mobile telecommunications technology. This may involve Short Message Service (SMS), email, and application software connected to the internet. The identifying may comprise: receiving contact information for establishing the electronic communication link. Such information may be a mobile phone number or an e-mail address. Alternatively or additionally, the identifying may comprise: determining if an application software is installed on the wireless device and identifying a communication link for interacting with the application software.

The operation process may further comprise subsequent to receiving the request for sending the image: sending a first signal to the second terminal via the electronic communication link indicating that the operation process is ongoing, and sending a second signal to the first terminal indicating the sending of the first signal. This has the effect that the first terminal knows that the second terminal has been notified that an identification is ongoing, and measures can be taken to prevent fraud. For example, the user of the first terminal knows that the second terminal has been notified, which means that he can ask the person claiming the identity to show the second terminal. If the request is not followed, the user of the first terminal can refuse to accept a claimed identity and can ask to see the second terminal.

The setup process may further comprise: receiving first identification information from the sender, and obtaining information associated with the electronic identity card for verifying the personal identity of the sender of the first identification information. Thus, the identification information is tied to the personal identity of the sender in the same manner as the digital picture. The request for sending the image may further comprise a second identification information, and the sending of the image to the first terminal may be performed if the second identification information can be associated with the first identification information. Here identification information is understood to encompass national identification or identity numbers, social security or insurance numbers, credit card numbers, and passport numbers. These features have the effect that the person can initiate an identification process and his or her image can be located in the system. The first identification information and the second identification information may be identical. Alternatively, the first identification number may be different from the second identification numbers, but can be uniquely associated with each other. It is only required that they can be associated with each other. For example, the first identification information may comprise the full 16 digits of a credit card number, while the second identification information may comprise the first four digits and the last four digits, which may allow them to be uniquely associated with one another. The first identification number and the second identification number may correspond to data stored in a Near Field Communication (NFC) tag, or data stored in a wireless device emulating an NFC card or tag for transferring the data. The first identification number and the second identification number may be different from a personal identification number or a credit card number.

The operation process may comprise prior to sending the second signal: receiving a response signal from the second terminal indicating whether a verification should be allowed or not. Further, the second signal may indicate whether a verification should be allowed or not based on the response signal. Thus, if the second signal indicates that a verification should be allowed, it can be assumed at the first terminal that the ongoing identification is accepted at the second terminal. However, if is indicated that a verification should not be allowed, it can be assumed at the first terminal that the ongoing identification is not accepted at the second terminal, and that fraud is a high risk. Thus, the response signal and the second signal contribute to an increased security.

The operation process may comprise prior to sending the second signal: determining if a response to the first signal has been received, and if no response has been received, the second signal may further indicate that no response has been received. This has the effect that it can be assumed at the first terminal that there is risk for fraud, which contributes to an increased security.

The identifying of the electronic communication link may comprise: receiving information indicating the electronic communication link from the sender, and obtaining information associated with the electronic identity card for verifying the personal identity of the sender of the information indicating the electronic communication link. This means that the electronic communication link is established with the same high security as the image. Examples of information indicating the electronic communication link are a mobile phone number and an email address.

The sender may be the second terminal and the method may further comprise an input process comprising: acquiring the digital picture at the second terminal, and transmitting the digital picture, e.g. so that it can be received in the setup process. Additionally, the input process may be performed on the second terminal. This feature contributes synergetically with the above-mentioned verification to an increased security. The electronic identity card is used to verify the personal identity of the sender of the digital picture, and the input process also verifies the second terminal as such. Further, it also allows the use of a well-controlled application program on the second terminal to both handle the provision of the digital picture as well as the verification, which reduces the vulnerability to fraud.

The image may comprise a plurality of image frames showing the face of the person from different perspectives. For example, there may be three frames showing the face: one from the front, one from the right side, and one from the left side. This contributes to an improved security over traditional identification documents that typically only allow a single frame. Additionally or alternatively, the image may be a composite of several frames, and/or constitute a three-dimensional picture. Subsequently to sending the image to the first terminal, the operation process may further comprise: displaying the image at the first terminal.

The operation process may further comprise prior to sending the second signal: determining a distance between the first terminal and the second terminal, and the second signal may further indicate the determined distance. Examples of an indication of distance are the actual distance in meters, a parameter proportional to the actual distance, and a confirmation of presence within a certain range. Together with the abovementioned electronic communication link to the second terminal and the input process performed on the second terminal, the information at the first terminal indicating the distance to the second terminal provides additional security. For example, a significant distance, for example 100 m or 300 m between the first terminal and the second terminal may indicate that a false identification is attempted.

The second signal may indicate whether a verification should be allowed or not based on the distance. For example, a verification may not be allowed if the distance is greater than a predetermined distance, such as 50 m, 200 m, and 500 m. The step of determining the distance may comprise: receiving a third signal from the second terminal indicating the positon of the second terminal. For example, the position of the second terminal may be determined with Global Positioning System (GPS) or telecommunication technologies implemented in the second terminal. The step of determining the distance may further comprise: obtaining the position of the first terminal, and determining the distance from the position of the first terminal and the position of the second terminal. The step of obtaining the position of the first terminal may comprise: receiving a fourth signal from the first terminal indicating the positon of the first terminal. For example, the position of the first terminal may be determined via GPS or telecommunication technologies, but also by specifying physical locations, such as street addresses or map-coordinates.

The method may further comprise: transferring the second identification information from the second terminal to the first terminal. This may be done to prior to receiving the request for sending the image. The second identification information may be stored on the second terminal. It may be transferred by way of short range communication, such as Bluetooth wireless standard technology, Wi-Fi local area wireless computer networking technology, Radio-Frequency IDentification (RFID) technology, and NFC technology. In combination with the abovementioned features, this creates a closed loop in which the second terminal both initiates and confirms the verification, which contributed to an increased security.

The second identification may be stored in an NFC tag, for example an NFC tag embedded in a sticker that can be attached to the second terminal. Alternatively, the second terminal may comprise an NFC tag or card, or be configured to emulate an NFC tag or card. The second identification information may be stored in the NFC tag or card, or in the wireless device and be accessible by the emulated NFC tag or card. The first terminal may be configured to read NFC tags or cards, for example by a NFC reader. The second identification information may be read from the NFC tag or card, or the emulated NFC tag or card, by the first terminal or the NFC reader. This has the effect that the second identification information is transferred from the second terminal to the first terminal.

If not indicated otherwise above, the different steps of the method may be executed on a server, in a server system, or in cloud computing environment.

To solve the above objects, a system for identifying a person is provided comprising a processor and a non-volatile memory containing program code instructions that, when executed on the processor of the system, causes the system to perform a setup process and an operation process. The setup process comprises: receiving a digital picture from a sender showing the face of the person, obtaining information associated with an electronic identity card for verifying the personal identity of the sender of the digital picture. The setup process may further comprise: providing and storing an image based on the digital picture. The operation process comprises: receiving a request for sending the image to a first terminal configured to display the image, and sending the image to the first terminal. The system may comprise any of the features described above in relation to the method of identification, such as the first terminal and the second terminal. Further, the program code instructions may cause the processor to execute any of the steps described above in relation to the method

To solve the above objects, a computer program product is also provided comprising program code instructions which are configured to, when executed on a processor of a system, cause the system to perform a setup process and an operation process. The setup process comprises: receiving a digital picture from a sender showing the face of the person, obtaining information associated with an electronic identity card for verifying the personal identity of the sender of the digital picture. The setup process may further comprise: providing and storing an image based on the digital picture. The operation process comprises: receiving a request for sending the image to a first terminal configured to display the image, and sending the image to the first terminal. The computer program product may comprise program code instructions which are configured to, when executed on a processor of the system, cause the system to further comprise any of the features and/or perform any of the steps described above in relation to the method of identification. The program code instructions may cause the processor to execute any of the steps described above in relation to the method. The program code instructions may be stored on a non-volatile memory, such as a flash memory.

Here, a processor is understood to encompass several processors working together, or one or more processors in a server based or cloud based environment.

### Brief Description of the Drawings

Embodiments of the invention will now be described, by way of example, with reference to the accompanying schematic drawings, in which
Fig.1 is a schematic view of a system for identifying a person,
Fig.2 is a flow-chart illustrating an embodiment of method for identifying a person,
Fig.3 is a flow-chart illustrating the setup process of the method described in relation to Fig.2,
Fig.4 is a flow-chart illustrating an embodiment of the setup process described in relation to Fig.3,
Fig.5 is a flow-chart illustrating the operation process of the method described in relation to Fig.2,
Fig.6 is a flow-chart illustrating an embodiment of the operation process described in relation to Fig.5,
Fig.7 is a flow-chart further illustrating the embodiment of the operation process described in relation to Fig.6,
Fig.8 is a flow-chart illustrating an alternative embodiment of the operation process described in relation to Fig.6,
Fig.9 is a flow-chart illustrating the sub-steps of determining the distance determining between first terminal and second terminal,
Fig.10 is a flow-chart illustrating the sub-step of obtaining the position of the first terminal,
Fig.11 is a flow-chart illustrating an additional sub-step of the operation process of the method described in relation to Fig.2,
Fig.12 is flow-chart illustrating an alternative embodiment of method for identifying a person, and
Fig.13 is flow-chart illustrating the input process of the method disclosed in relation to Fig.12.

### Detailed description

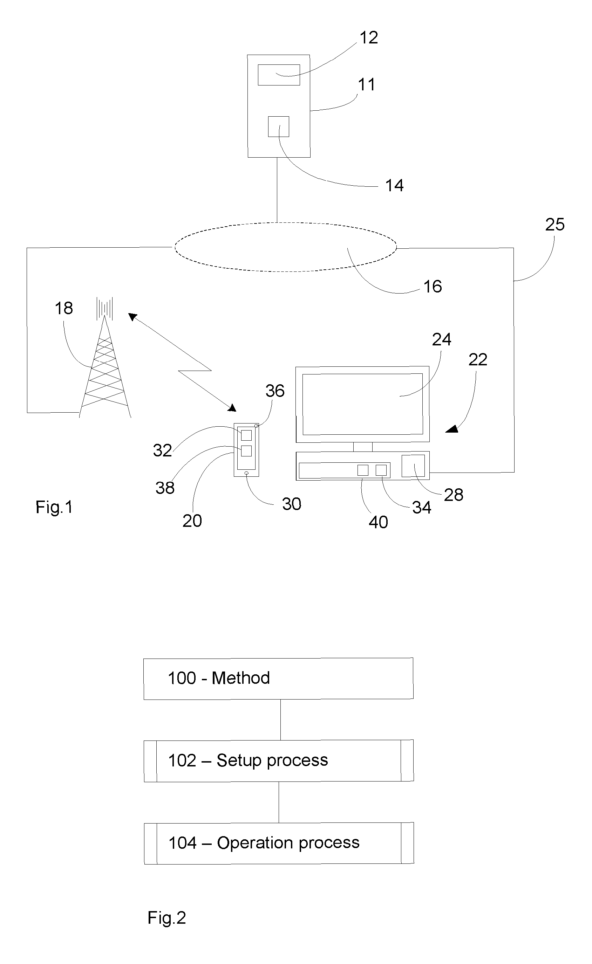

Fig.1 is a schematic view of a system for identifying a person. The system has a processor 12 and a non-volatile memory 14. The processor 12 is a general purpose processor. In an alternative embodiment, the processor 12 may be dedicated to its described function. A processor as a concept is here understood to encompass a single processor that individually handles a process, or a group of processors that cooperate to handle a process. Similarly, a non-volatile memory as a concept is here understood to encompass a single non-volatile memory that individually stores program code instructions, or a group of non-volatile memories that cooperate to store program code instructions. In the embodiment of Fig.1, the system has a single general purpose processor 12 and a single non-volatile memory 14, which form part of a server 11. The server 11 is connected to the internet 16.

The system has a first terminal 22 in the form of a stationary PC with a display 24. The first terminal 22 is connected to the internet 16 by hardwired broadband fiber access 25. The system also has a second terminal 20 in the form of a smartphone, thus constituting a wireless device. The second terminal 20 is connected to the internet 16 by way of wireless broadband access 18. The non-volatile memory 14 comprises program code instructions that, when executed on the processor 12, enables the server 14 to communicate with the first terminal 22 and the second terminal 20 via the internet 16.

The non-volatile memory 14 contains program code instructions that, when executed on the processor 12 of the server 11, causes the server 11, or system 10, to perform a method 100 by which the identity of a person can be determined. The method, which is illustrated in Fig.2, includes a setup process 102 and an operation process 104.

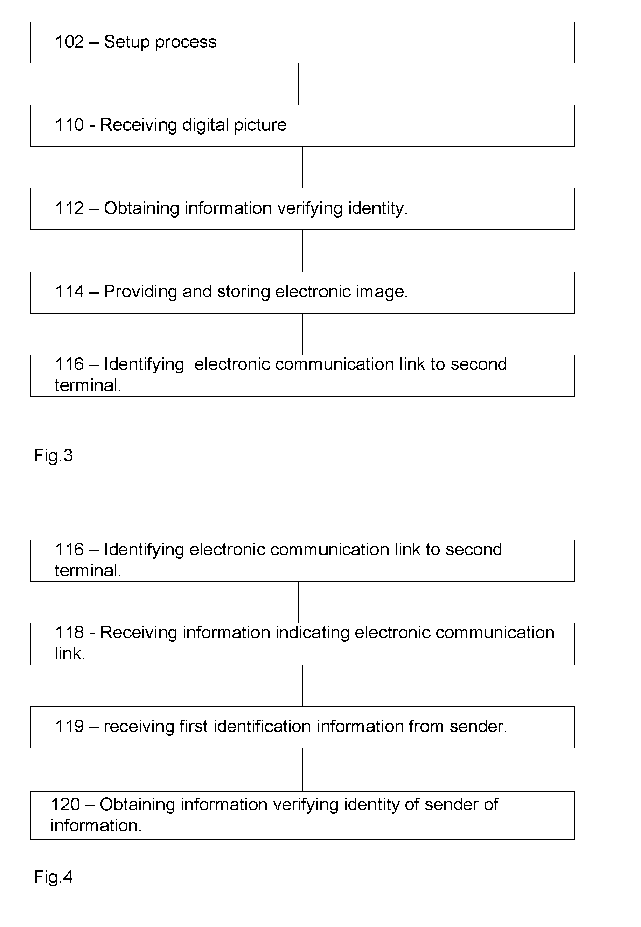

The setup process 102 includes a number of sub-steps, which are shown in the flow-chart of Fig.3. In the first sub-step, a digital picture is received 110 from the second terminal 20 showing the face of the person. Thus the second terminal 20 is the sender of the digital picture and the server 11 is the receiver. The server 11 then obtains 112 information via the internet 16 from a trusted authentication server (not shown) verifying the personal identity of the sender of the digital picture by way of an electronic identity card. In the present embodiment, the previously mentioned Mobilt BankID is installed on and employed by the second terminal 20 to provide the electronic identity card in cooperation with the authentication server. An image is then provided (114) by changing the format of the digital picture to JPEG. Subsequently, the image is stored in the non-volatile memory 14.

The mobile phone number associated with the Subscriber Identity Module (SIM) card installed in the second device 20 is sent from the second terminal 20 to the server 11. Thus, an electronic communication link to the second terminal 20 has been identified (116) and information indicating the electronic communication link has been received (118). The sender of the mobile phone number is verified by the same verification process as is used for verifying as the sender of the digital picture. Thus, information associated with the electronic identity card has been obtained (120) that verify the personal identity of the sender of the information indicating the electronic communication link. Here the sender of the digital picture and the sender of the information indicating the electronic communication link are the same, namely the second terminal 20. The sub-steps described here are illustrated in the flow-chart of Fig.4.

A national identification number is sent from the second terminal 20 to the server 11. Thus, a first identification information from the sender has been received 119 by the server. The sender of the national identification number is verified by the same verification process as is used for verifying as the sender of the digital picture. Thus, information associated with the electronic identity card has been obtained 120 that verify the personal identity of the sender of the national identification number. These sub-steps are illustrated in the flow-chart of Fig.4. In an alternative embodiment, a credit card number is used instead of a national identification number.

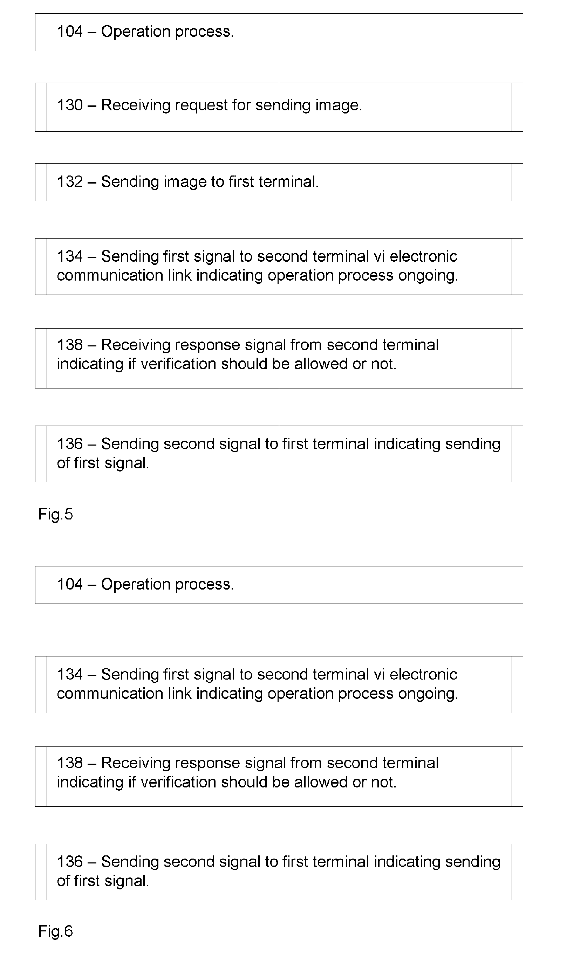

The operation process 104 includes a number of sub-steps, which are shown in the flow-chart of Figs.5-7. The first terminal 22 sends a message via the internet 16 that is received 130 by the server 11. The message is a request for sending the image to a first terminal 22. The image is then sent 132 to the first terminal 22, after which it is shown on the display 24. The request for sending the image also includes the second identification information in the form of a national identification number. The first identification number and the second identification number are compared, and if they are the same, i.e. if the second identification information can be associated with the first identification information, the sending 132 of the image to the first terminal 22 is performed. In the present embodiment, the first identification number has been obtained at the first terminal 22 by scanning a physical ID-card.

A first signal is then sent 134 to the second terminal 20 via the electronic communication link via the internet 116. The first signal indicates that the operation process is ongoing. Thus, the second terminal is informed that a verification of its user is attempted. The user is then presented with a choice to allow or deny a verification. A response signal is sent from the second terminal 20 and received 138 by the server 11, and the response signal indicates the choice of the user, i.e. whether a verification should be allowed or not.

A second signal is then sent 136 to the first terminal 22 indicating whether a verification should be allowed or not based on the response signal. For example, if the response signal indicates that a verification should be allowed, the second signal also indicates that a verification should be allowed. Thus, the second signal also indicates the sending of the first signal. The server 11 also determines 139 if the response signal has been received. If the response signal has not been received, the second signal instead indicates that no response has been received. This may occur when the first terminal is shut off our outside coverage. The indication of the second signal is shown on the display 24 of the first terminal 22, a green symbol if the verification should be allowed, and a red symbol if the verification should not be allowed or if no response signal has been received.

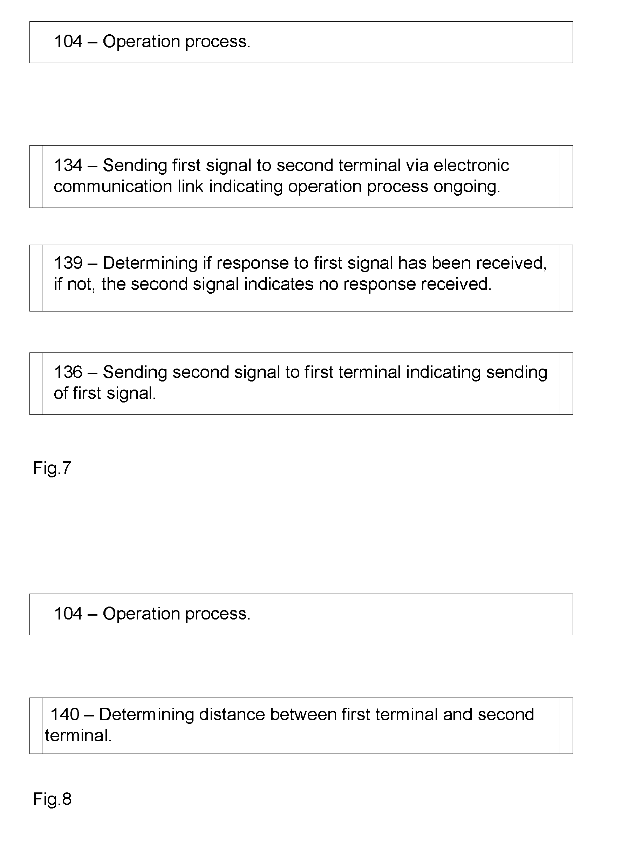

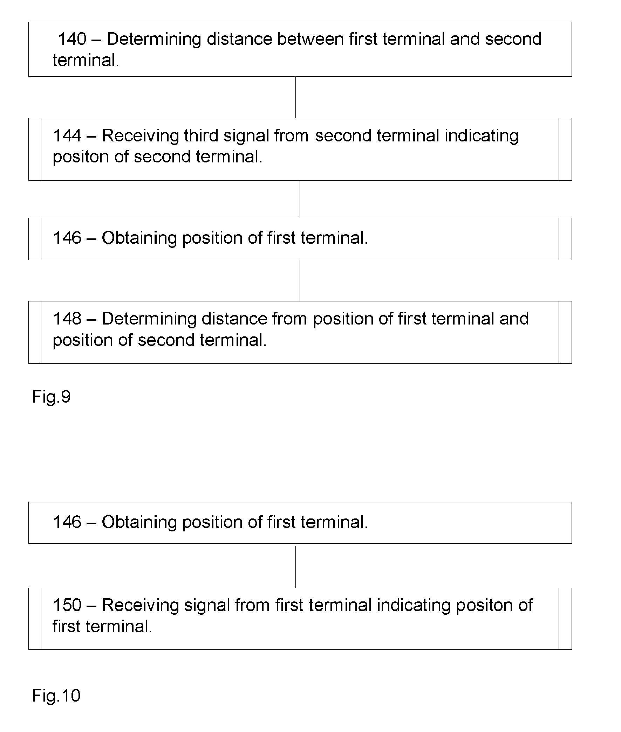

Figs.8-10 are flow-charts illustrating an alternative embodiment of the sub-steps of the operation process illustrated in Figs.6-7. The second terminal has a GPS unit 32 by which its coordinates are determined. In the operation process 104, prior to sending 136 the second signal, a third signal including the coordinates is sent from the second terminal 20 and received 144 by the server 11, thus indicating the positon of the second terminal 20. The first terminal 22 also has a GPS unit 34 by which its coordinates are determined. In the operation process 104, prior to sending 136 the second signal, a fourth signal including the coordinates is sent from the first terminal 22 and received 150 by to the server 11, as is illustrated in Fig.10, thus indicating the positon of the first terminal 22, and the position of the first terminal has been obtained 146 by the server 11. The distance from the position of the first terminal and the position of the second terminal is then determined 140, 148 from the two sets of coordinates. If the distance is greater than 100 m, it is determined that the verification should not be allowed, and this is indicated by the second signal, thus also indicating the determined distance. In another embodiment, the determined distance is included in the second signal and shown in the display 24 of the second terminal 22.

The first terminal 22 has an NFC reader 40 and the second terminal 20 has an embedded NFC tag 38. The second identification information is stored in the NFC tag 38, and the operation process 104 further includes the step of transferring or transmitting 152 the second identification information from the second terminal 20 to the first terminal 22. This is done by the NFC reader 40 reading the NFC tag 38 to prior to the request 130 for sending the image is sent from the first terminal 22 to the server 11. In alternative embodiments, the transmitting 152 is performed by way of RFID, Bluetooth technology and Wi-Fi technology. The second identification information is included in the request for sending the image, as is described above. In one embodiment, the second identification information stored in the NFC tag 38 is sent from the second terminal 20 to the server 11 in the setup process 102, and is regarded as the first identification information in the subsequent steps. Thus, the first and second identification information are identical.

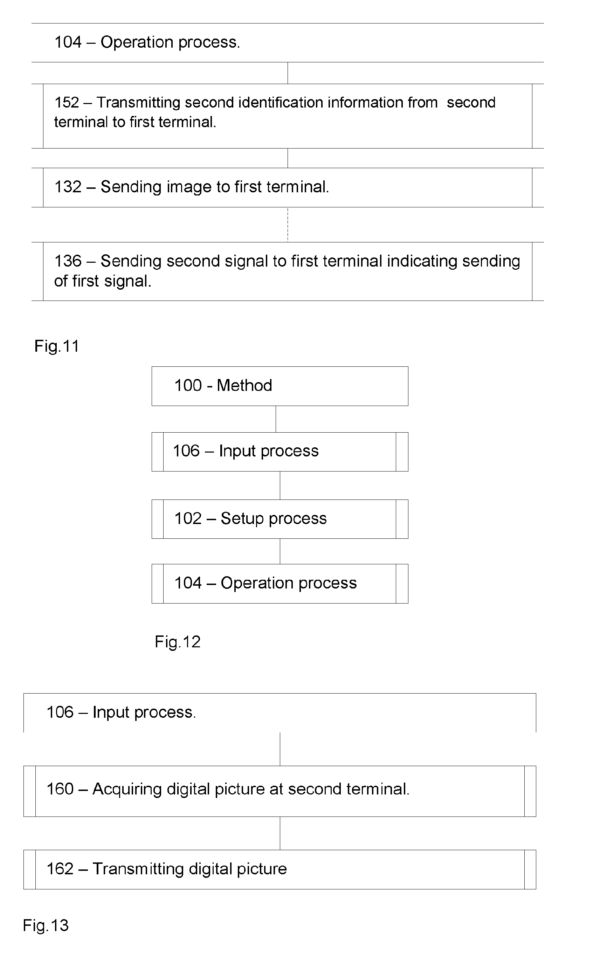

Fig.12 is flow-chart illustrating an alternative embodiment of method 100 for identifying a person that can be implemented in the system described in relation to Fig.1. The method 100 includes an input process 106, a setup process 102, and an operation process 104. The latter two processes are identical to the corresponding processes described in relation to Figs.2-10. The input process 106, which is illustrated in the flow-chart of Fig.13, is performed on the second terminal 20, which comprises a camera 36. The digital picture is acquired 160 by the camera 36, i.e. at the second terminal 20, and then transmitted 162 from the second terminal 20 to the server 11.

It should be noted that in the description above, the system is regarded as comprising the server 11, first terminal 22, and the second terminal 20. In a different embodiment, the system is regarded as the server 11 alone. The server may also be regarded as a control unit or a sub-system in a system also comprising the first terminal 22 and the second terminal 20. Transmitting a signal or response is here understood to encompass a single transmission, or several transmission spread out in time. Similarly, sending a signal or response is here understood to encompass an uninterrupted sending, or several sending operations spread out in time.

From the description above follows that, although various embodiments of the invention have been described and shown, the invention is not restricted thereto, but may also be embodied in other ways within the scope of the subject-matter defined in the following claims.

## Claims

1. A method (100) for identifying a person comprising a setup process (102) and an operation process (104), wherein the setup process (102) comprises:
- receiving (110) an digital picture from a sender showing the face of a person,
- obtaining (112) information associated with an electronic identity card for verifying the personal identity of the sender of the digital picture,
- providing (114) and storing an image based on the digital picture, and
wherein the operation process (104) comprises:
- receiving (130) a request for sending the image to a first terminal configured to display the image, and
- sending (132) the image to the first terminal,
wherein the setup process further comprises:
- identifying (116) an electronic communication link to a second terminal, wherein the second terminal is a wireless device,
and the operation process further comprises subsequently to receiving (130) the request for sending the image:
- sending (134) a first signal to the second terminal via the electronic communication link indicating that the operation process is ongoing, and
- sending (136) a second signal to the first terminal indicating the sending of the first signal.

2. The method according to claim 1, wherein the setup process (102) further comprises:
- receiving (119) first identification information from the sender, and
- obtaining (118) information associated with the electronic identity card for verifying the personal identity of the sender of the first identification information,
the request for sending the image further comprises second identification information, and the sending (132) of the image to the first terminal is performed if the second identification information can be associated with the first identification information.

3. The method according to claim 1 or 2, wherein the operation process comprises prior to sending (136) the second signal:
- receiving (138) a response signal from the second terminal indicating whether a verification should be allowed or not, and wherein
the second signal further indicates whether a verification should be allowed or not based on the response signal.

4. The method according to any of the claims 1-3, wherein the operation process comprises prior to sending (136) the second signal:
- determining (139) if a response to the first signal has been received, and if no response has been received, the second signal further indicates that no response has been received.

5. The method according to any of the claims 1-4, wherein the identifying (116) the electronic communication link comprises:
- receiving (118) information indicating the electronic communication link from the sender, and
- obtaining (120) information associated with the electronic identity card for verifying the personal identity of the sender of the information indicating the electronic communication link.

6. The method according to any of the claims 1-5, wherein the sender is the second terminal and the method further comprises an input process (106) comprising:
- acquiring (160) the digital picture at the second terminal, and
- transmitting (162) the digital picture.

7. The method according to claim 6, wherein the input process is performed on the second terminal.

8. The method according to claim 6 or 7, wherein the image comprises a plurality of image frames showing the face of the person from different perspectives.

9. The method according to any of the claims 1-8, wherein the operation process (104) further comprises prior to sending (136) the second signal:
- determining (140) a distance between the first terminal and the second terminal, and the second signal further indicates the determined distance.

10. The method according to claim 9, wherein the second signal indicates whether a verification should be allowed or not based on the distance.

11. The method according to claim 9 or 10, wherein the step of determining (140) the distance comprises:
- receiving (144) a third signal from the second terminal indicating the positon of the second terminal,
- obtaining (146) the position of the first terminal, and
- determining (148) the distance from the position of the first terminal and the position of the second terminal.

12. The method according to claim 11, wherein the step of obtaining (146) the position of the first terminal comprises:
- receiving a fourth signal (150) from the first terminal indicating the positon of the first terminal.

13. The method according to claim 2 or any of the claims 3-12 referencing claim 2, wherein the method further comprises prior to receiving the request for sending the image further comprises:
transferring the second identification information from the second terminal to the first terminal.

14. A system for identifying a person is provided comprising a processor and a nonvolatile memory containing program code instructions that, when executed on the processor of the system, causes the system to perform a setup process and an operation process. The setup process comprises:
- receiving a digital picture from a sender showing the face of the person,
- obtaining information associated with an electronic identity card for verifying the personal identity of the sender of the digital picture,
- providing and storing an image based on the digital picture;
the operation process comprises:
- receiving a request for sending the image to a first terminal configured to display the image, and sending the image to the first terminal.

15. A computer program product comprising program code instructions which are configured to, when executed on a processor of a system, cause the system to perform a setup process and an operation process, the setup process comprises:
- receiving a digital picture from a sender showing the face of the person,
- obtaining information associated with an electronic identity card for verifying the personal identity of the sender of the digital picture,
- providing and storing an image based on the digital picture; and
the operation process comprises:
- receiving a request for sending the image to a first terminal configured to display the image, and
- sending the image to the first terminal.
